# EUROPÄISCHE PATENTSCHRIFT

(11) **EP 3 019 740 B1**
(45) Veröffentlichungstag und Bekanntmachung des Hinweises auf die Patenterteilung: **01.11.2017**
(21) Anmeldenummer: 15745376.2
(22) Anmeldetag: 05.06.2015
(51) Int. Cl.: B63B 35/44, F03D 13/25

(54) **SCHWIMMENDE WINDENERGIEANLAGE MIT EINEM SCHWIMMENDEN FUNDAMENT UND VERFAHREN ZUR INSTALLATION EINER SOLCHEN WINDENERGIEANLAGE**
FLOATING WIND TURBINE WITH A FLOATING FOUNDATION, AND METHOD FOR INSTALLATION OF SUCH A WIND TURBINE
ÉOLIENNE FLOTTANTE À BASE FLOTTANTE ET PROCÉDÉ D'INSTALLATION D'UNE ÉOLIENNE FLOTTANTE DE CE TYPE

(30) Priorität: 01.07.2014 DE 102014109212
(43) Veröffentlichungstag der Anmeldung: 18.05.2016
(60) Teilanmeldung: 16155578.4
(73) Patentinhaber: Aerodyn Engineering GmbH, 24782 Büdelsdorf (DE)
(72) Erfinder: SIEGFRIEDSEN, Sönke, 24768 Rendsburg (DE)
(74) Vertreter: Lobemeier, Martin Landolf
(86) Internationale Anmeldenummer: PCT/DE2015/100225
(87) Internationale Veröffentlichungsnummer: WO 2016/000681

(56) Entgegenhaltungen:
- US-A1- 2011 140 451
- US-A1- 2014 017 083

## Beschreibung

Die Erfindung betrifft eine schwimmende Windenergieanlage mit einem schwimmenden Fundament, einem auf dem schwimmenden Fundament angeordneten Turm und einer auf dem Turm angeordneten, einen Rotor aufweisenden Energiewandlungseinheit, wobei die Windenergieanlage als Lee-Läufer ausgebildet, das schwimmende Fundament drehbar verankert, und der Turm mit dem schwimmenden Fundament einerseits und der Energiewandlungseinheit andererseits drehfest verbunden ist.

Schwimmende Windenergieanlagen für große Wassertiefen sind beispielsweise aus der EP 2 271 547 B1 bekannt. Insbesondere bestehen derartige Anlagen aus einem in Draufsicht in Form eines gleichseitigen Dreiecks ausgebildeten Rahmen, an dessen Spitzen die Säulen angeordnet sind, wobei der Turm der Windenergieanlage auf einer dieser Säulen oder durch ein Tragwerk gestützt mittig zwischen den Säulen errichtet ist.

Nachteilig an dieser Ausgestaltung sind jedoch die Komplexität der Konstruktion und der hohe Arbeitsaufwand zur Herstellung des Rahmens. Insbesondere benötigt die bekannte Anlage eine relativ große horizontale und vertikale Ausdehnung, um die am Rotor der Windenergieanlage auftretenden Kräfte aufnehmen zu können und ist daher sowohl für die Konstruktion als auch die Installation auf hohe Wassertiefen angewiesen.

In der von der Anmelderin zuvor eingereichten deutschen Patentanmeldung Nr. 10 2014 102 481.8 ist bereits eine schwimmende Windenergieanlage mit den eingangs genannten Merkmalen beschrieben, die ein unterhalb der Wasserlinie angeordnetes aus mehreren Auftriebskörpern gebildetes Fundament aufweist, wobei das Fundament im Wesentlichen als Verlängerung des Turms der Windenergieanlage anzusehen ist. Insbesondere ist dort vorgesehen, dass der Turm der als Lee-Läufer ausgebildeten Windenergieanlage mit dem Fundament einerseits und der Energiewandlungseinheit andererseits drehfest verbunden und das schwimmende Fundament drehbar verankert ist und der Turm wenigstens abschnittsweise ein die Windrichtungsnachführung unterstützendes Profil besitzt. Diese Anlage ist zwar auch für den Einsatz in tiefen Gewässern mit Tiefen von >200 m vorgesehen, da zur Stabilisierung der Anlage in der Vertikalen ein relativ langer durch das Fundament gebildeter Abschnitt unter Wasser benötigt wird. Allerdings wird zur Fertigung dieser Anlage an Land weniger Platz in Anspruch genommen als für die zuerst genannte Anlage.

Schließlich ist aus der EP 1 269 018 B1 eine Windenergieanlage bekannt, die als Fundament einen Katamaran-ähnlichen Auftriebskörper aufweist und insbesondere zur Installation in flachen Gewässern geeignet ist. Diese Anlage ist als Lee-Läufer ausgelegt, wobei ebenfalls durch die feste Verbindung von Turm zu Fundament einerseits und Turm zu Energiewandlungseinheit andererseits auf eine Yaw-Lagerung mit Yaw-Antrieb verzichtet wird und stattdessen vorgesehen ist, dass die Anlage mittels Ketten oder Seilen an einem Ankerpunkt um diesen drehbar verankert ist, so dass sich die Anlage selbständig nach der vorherrschenden Windrichtung ausrichtet.

Der Turm weist in Windrichtung zur Minimierung des Windschattens ein aerodynamisches Profil auf, und besitzt insbesondere ein vom oberen Turmbereich in Richtung Luv verlaufendes, beispielsweise als Seil ausgebildetes Versteifungselement, das mit dem Fundament verbunden ist.

Hieran nachteilig ist jedoch der einem Katamaran ähnelnde Aufbau des Fundaments und die Anordnung des Turms auf einem die Auftriebskörper verbindenden Steg, sodass die am Rotor bzw. der Energiewandlungseinheit auftretenden Lasten eher einseitig in das Fundament abgeleitet werden und die schwimmende Windenergieanlage zum Krängen neigt.

Weitere schwimmende Windenergicanlagen sind beispielsweise aus der US 20111/140451 A1 und der US 2014/017083 A1 bekannt.

Neben der Konstruktion von Offshore-Windenergieanlagen selbst stellt auch deren Installation eine besondere Herausforderung dar. Prinzipiell wünschenswert ist ein hoher Fertigungsgrad an Land, sodass die Installation auf dem Meer mit relativ geringem Aufwand und innerhalb kurzer Zeit erfolgen kann. So wird die aus der zuvor erwähnten EP 2 271 547 B1 bekannte Offshore-Windenergieanlage vollständig an Land gefertigt und zum Ort ihrer Verwendung geschleppt, an dem sie mittels mehrerer Ankerketten am Meeresgrund verankert wird.

Nachteilig an der Verankerung ist aber der hohe Aufwand zum Entkoppeln der die Offshore-Windenergieanlage verankernden Festmachleinen und auch der elektrischen Verbindung mit dem Seekabel, sodass im Wartungs- oder Reparaturfall, wenn die Anlage wieder in den Hafen geschleppt werden soll, trotz vorausgesetzter günstiger Wetterbedingungen mit langen Stillstandzeiten zu rechnen ist.

Aufgabe der Erfindung ist es daher, den Aufbau der beiden zuletzt genannten schwimmenden Windenergieanlagen in Bezug auf ihr Fundament so zu verbessern, dass eine kompakte und stabile schwimmende Windenergieanlage geschaffen wird, die in ihrem Aufbau einfach, in ihrer Herstellung wenig arbeitsaufwändig und darüber hinaus in ihrer Grundkonstruktion für Gewässer sowohl mit geringer als auch mit großer Tiefe geeignet ist.

Diese Aufgabe wird erfindungsgemäß durch die schwimmende Windenergieanlage mit den Merkmalen von Anspruch 1 gelöst. Die Unteransprüche geben vorteilhafte Ausgestaltungen der Erfindung wieder.

Grundgedanke der Erfindung ist es, die Geometrie in der horizontalen und in der vertikalen Erstreckung der Anlage so auszulegen, dass die am Rotor bzw. der Energiewandlungseinheit auftretenden Lasten möglichst direkt ohne am Turm auftretende Biege- oder Torsionsmomente in das Fundament einzuleiten. Durch Abfangen der auf den Turm der Windenergieanlage wirkenden Zug- und Druckkräfte und die damit verbundene Minimierung des auf den Turm wirkenden Biegemoments ist es möglich, die horizontale und vertikale Ausdehnung des Fundaments so zu verringern, dass die erfindungsgemäß ausgestaltete Windenergieanlage sowohl für große als auch für geringe Wassertiefen geeignet ist.

So ist es möglich, eine voll funktionsfähige, ein schwimmendes Fundament aufweisende Offshore-Windenergieanlage an den Ort ihrer Nutzung zu verbringen, dort mit wenigstens einem vorinstallierten, am Meeresboden verankerten Verankerungsmittel oder einem mit diesem verbundenen Schwimmkörper zu verbinden und insgesamt durch Fluten des Fundaments auf ein Niveau abzusenken, bei dem das gesamte Fundament unterhalb der Wasserlinie angeordnet ist. Insbesondere ist hierfür vorgesehen, dass die am Gewässergrund verankerten Verankerungsmittel, beispielsweise Ankerketten oder Ankerseile, von einem einzigen Schwimmkörper gemeinsam oder einzeln von wenigstens je einem Schwimmkörper an der Oberfläche schwimmend in Position gehalten werden. Weiter wird ein zuvor verlegtes Seekabel ebenfalls durch einen Schwimmkörper am vorbestimmten Ort der Installation gesichert, sodass die Windenergieanlage lediglich mechanisch mit dem/den Schwimmkörper(n) oder den Verankerungsmitteln und elektrisch mit dem Seekabel verbunden werden muss.

Die Erfindung betrifft also eine schwimmende als Lee-Läufer ausgebildete Windenergieanlage, die ein schwimmendes Fundament, einen auf dem schwimmenden Fundament drehfest angeordneten Turm, eine auf dem Turm angeordnete, einen Rotor aufweisende Energiewandlungseinheit, die mit dem Turm drehfest verbunden ist, und wenigstens ein Spannelement aufweist, das in Luv-Richtung verlaufend den Turm oder die Energiewandlungseinheit mit dem Fundament verbindet. Weiter weist das Fundament erfindungsgemäß drei Arme auf, von denen ein Arm länger als die beiden anderen Arme ist, wobei die Arme Y-förmig miteinander verbunden sind und der Turm im Verbindungsbereich der Arme miteinander auf dem Fundament angeordnet ist, und der längste Arm sich in Luv-Richtung erstreckend mittels des Spannelements mit dem Turm oder der Energiewandlungseinheit verbunden ist.

Bevorzugt weist die schwimmende Lee-Läufer-Windenergieanlage wenigstens ein zu beiden Seiten der Windenergieanlage quer zur Rotorachse, schräg nach Lee verlaufendes weiteres Spannelement zur Aufnahme von Querkräften auf, das den Turm oder die Energiewandlungseinheit mit jeweils einem der kürzeren Arme des Fundaments verbindet.

Im bevorzugten Fall bilden die Spannelemente die Kanten eines gedachten Tetraeders, wobei die Tetraederecken von den Anschlagpunkten der Spannelemente an den Armen und den Anschlagpunkten an der Energiewandlungseinheit bzw. dem Turm gebildet werden. Darüber hinaus sind nach einer bevorzugten Ausgestaltung am Turm quer zur Rotorachse angeordnete Salinge und die Energiewandlungseinheit und/oder den Turm und/oder das Fundament mit den Salingen verbindende Abspannelemente vorgesehen.

Die vorgenannten Spannelemente sind bevorzugt als Seile ausgebildet, wobei insbesondere Stahlseile Verwendung finden. Alternativ können auch Distanzstangen eingesetzt werden.

Der Turm ist im Verhältnis zum Fundament bevorzugt bis zu 20° in Richtung Lee geneigt, wobei der Turm besonders bevorzugt wenigstens abschnittsweise ein die Windrichtungsnachführung der Windenergieanlage unterstützendes Profil aufweist. Durch dieses Profil wird auch die Wirbelbildung in der Nachlaufströmung vermindert. Durch die Neigung des Turms wird einerseits der Abstand der Blätter zum Turm vergrößert und andererseits durch das Turmkopfgewicht ein Gegenmoment bei Bremslasten mit Negativschub geschaffen.

Vorteilhaft ist es, wenn die beiden kurzen Arme des Fundaments gleich lang sind. Alternativ können die kurzen Arme auch unterschiedlich lang ausgebildet sein, um dem am Rotor auftretenden Drehmoment entgegen zu wirken.

Bevorzugt ist das Fundament als Hohlkörper aus Beton gefertigt und weist eine Wandstärke zwischen 20 und 60 cm auf. In diesem Fall sind die drei Arme oder einen Arm bildende Bestandteile des Fundaments speziell mittels in der Wandung des Fundaments verlaufenden Spannlitzen miteinander verspannt. Hierfür werden beispielsweise Rohre in die bevorzugt 20 bis 60 cm dicke Wandung des Fundaments eingegossen, durch die nachträglich Spannlitzen geführt werden, die für eine Verspannung der Betonteile miteinander sorgen und damit der geringen Zugfestigkeit des Betons entgegenwirken.

Alternativ kann das Fundament auch aus Stahl gefertigt sein.

Da das Fundament als Hohlkörper ausgebildet ist, kann in das schwimmende Fundament beispielsweise mittels Pumpen Wasser aufgenommen werden und damit die Eintauchtiefe des Fundaments reguliert werden. So ist beispielsweise vorgesehen, dass das Fundament ohne Ballastwasser mitzuführen eine Eintauchtiefe von etwa 2,80 m aufweist, wohingegen das Fundament durch Fluten des Fundaments, also durch Aufnahme von Ballastwasser auf etwa 15 m unterhalb der Wasserlinie abgesenkt werden kann.

Gleichermaßen kann das Fundament auch zur Trimmung der schwimmenden Windenergieanlage herangezogen werden. Zur Trimmung weist die schwimmende Windenergieanlage bevorzugt also eine Einrichtung zur Aufnahme und Abgabe von Ballastwasser auf. Dabei nutzt diese Einrichtung zur Aufnahme und Abgabe von Ballastwasser den im Fundament vorgesehenen Hohlraum, der auch in mehrere Trimmtanks unterteilt sein kann.

Bei der erfindungsgemäß ausgestalteten schwimmenden Windenergieanlage ist die Trimmung besonders einfach durchzuführen:
Ohne Windlast ist die schwimmende Windenergieanlage so zu dimensionieren, dass das Fundament horizontal ausgerichtet ist. Da die schwimmende Windenergieanlage als Lee-Läufer so konzipiert ist, dass sich die gesamte Anlage einschließlich Fundament aus dem Wind dreht, kann die Windlast an der Energiewandlungseinheit nur dazu führen, dass die nach Lee gerichteten, mit den kurzen Armen verbundenen Auftriebskörper unter Wasser gedrückt und der nach Luv gerichtete, mit dem langen Arm verbundene Auftriebskörper aus dem Wasser heraus gehoben wird - die Anlage würde damit eine nach Lee gerichtete Schlagseite erhalten.

Um die Anlage wieder in die Horizontale zu bringen ist es also lediglich notwendig, das Gewicht des langen Arms durch Aufnahme von Wasser zu erhöhen, wobei die Gewichtszunahme aufgrund der Hebelgesetze relativ gering ausfallen kann. So kann bei Bedarf (zusätzliches) Meerwasser in einen im langen Arm angeordneten Hohlraum gepumpt werden, um durch Zunahme des Gesamtgewichts des langen Arms eine Absenkung des langen Arms zu bewirken.

Nach einer besonders bevorzugten Ausgestaltung der Erfindung, ist jedoch an jeweils einem freien Ende jeweils eines Arms des Fundaments ein Auftriebskörper, der bevorzugt aus glasfaserverstärktem Kunststoff gefertigt ist, vorgesehen. Diese Auftriebskörper sind vorteilhafterweise jeweils gelenkig, beispielsweise mittels Drahtseilen, mit dem freien Ende jeweils eines Arms des Fundaments verbunden und besonders bevorzugt konisch ausgebildet, wobei die Deckfläche oder Spitze der konisch ausgebildeten Auftriebskörper mit dem freien Ende jeweils eines Arms des Fundaments verbunden ist. Durch dieses progressive Auftriebsprofil der Auftriebskörper wird die Anlage bei Last besser in der Horizontalen stabilisiert.

Neben den vorgenannten Auftriebskörpern können am freien Ende der Arme auch zylindrische Auftriebskörper (ohne progressives oder degressives Auftriebsprofil) angeordnet sein. Diese sind entweder jeweils mit einem freien Ende eines Arms fest oder mittels eines Gelenks verbunden. Das Gelenk kann dabei als einfaches Scharnier mit einem Freiheitsgrad oder als Gelenk mit mehr Freiheitsgraden ausgebildet sein.

Insbesondere ist vorgesehen, dass die freien Enden der kurzen Arme Auftriebskörper aufweisen, die einen größeren Auftrieb erzeugen als der mit dem freien Ende des langen Arms verbundene Auftriebskörper.

Bei dieser Ausgestaltung ist es vorteilhaft, wenn neben den in den Armen des Fundaments angeordneten Tanks im Verbindungsbereich der Arme untereinander ein Trimmtank vorgesehen ist, der also unterhalb des Turms angeordnet ist. Durch Regulierung des Wasserpegels in Abhängigkeit von der auf den Rotor wirkenden Windlast allein in diesem Trimmtank kann eine horizontale Ausrichtung des Fundaments erhalten bleiben. Im Normalfall ist der Trimmtank unterhalb des Turms bis zu einem vorbestimmten Niveau geflutet, sodass das Fundament horizontal ausgerichtet ist. Steigt die auf den Rotor wirkende Windlast und beginnt das Fundament nach Lee zu krängen, kann dieser Trimmtank beispielsweise durch Einleiten von Druckluft (teilweise) entleert und damit das Gewicht des Fundaments in diesem Bereich verringert werden, sodass trotz hoher Windlast die horizontale Ausrichtung des Fundaments und damit der Anlage erhalten bleibt. Fällt die Windlast wieder weg, wird der Trimmtank wieder auf sein Ausgangsniveau geflutet. Dieser Vorgang wird durch eine Steuereinheit, die mit einem Neigungsmesssystem, das die horizontale Ausrichtung des Fundaments erfasst, verbunden ist und Einwirken auf mit diesem verbundene Pumpen und/oder Kompressoren und entsprechend vorgesehene Ablassventile gesteuert. Schließlich ist die schwimmende Windenergieanlage bevorzugt mit einem als Zweiblattrotor ausgestaltetem Rotor ausgestattet, wobei die Energiewandlungseinheit besonders bevorzugt als Super Compact Drive ausgebildet ist.

Zur Installation der schwimmenden Windenergieanlage nach der Erfindung an einem vorbestimmten Ort bzw. an einer vorbestimmten Position in einem Gewässer sind nach der Fertigstellung der Windenergieanlage im Dock die folgenden Schritte erforderlich: a. Verlegen eines Seekabels zu einem vorbestimmten Ort, an dem die Lee-Läufer-Windenergieanlage installiert werden soll, b. Verankern wenigstens eines Verankerungsmittels am vorbestimmten Ort und Verbinden des Verankerungsmittels mit einem Schwimmkörper, c. Transportieren der schwimmenden Lee-Läufer-Windenergieanlage zum vorbestimmten Ort, d. Verbinden des Schwimmkörpers oder des Verankerungsmittels und des Seekabels mit der schwimmenden Lee-Läufer-Windenergieanlage, und e. Absenken der mit dem Schwimmkörper oder mit dem Verankerungsmittel und dem Seekabel verbundenen Lee-Läufer-Windenergieanlage durch Fluten des schwimmenden Fundaments, wobei die Schritte c), d) und e) in der Reihenfolge c-d-e, c-e-d oder e-c-d vorgenommen werden.

Bevorzugt wird auch das Seekabel, das zur elektrischen Verbindung mit der Windenergieanlage bereitgehalten wird, mit einem eigenen Schwimmkörper verbunden.

Ein einfaches und zügiges Installationsverfahren kann also darin bestehen, dass zunächst das Seekabel verlegt und mit einem Schwimmkörper verbunden wird und darauf die Verankerungsmittel für jede Windenergieanlage am Meeresboden verankert und mit jeweils einem eigenen Schwimmkörper (oder einem gemeinsamen Schwimmkörper) verbunden werden. Die Schwimmkörper erleichtern also das Auffinden des Installationsorts und erlauben den Zugriff auf Verankerungsmittel und Seekabel direkt an der Wasseroberfläche. Wird die Windenergieanlage zum Ort der Installation geschleppt kann die Verbindung zwischen den Verankerungsmitteln und dem Seekabel also durch einfachen Zugriff an der Wasseroberfläche erfolgen und die Windenergieanlage anschließend durch Fluten des Fundaments in den betriebsbereiten Zustand versetzt werden.

Als erste Alternative kann eine schwimmende Windenergieanlage auch zum Installationsort geschleppt, dort zunächst abgesenkt und darauf angeschlossen werden. Als weitere Alternative kann auch eine abgesenkte schwimmende Windenergieanlage zum Installationsort geschleppt und in einem nächsten Schritt direkt angeschlossen werden.

Wird zur Markierung und zum Bereitstellen von Verankerungsmitteln und Seekabel nur ein einziger Schwimmkörper verwendet, ist der Schwimmkörper besonders bevorzugt so ausgebildet, dass bei der mechanischen Verbindung der Windenergieanlage mit dem Schwimmkörper bevorzugt auch ein elektrischer Kontakt zwischen der schwimmenden Lee-Läufer-Windenergieanlage und dem Seekabel geschaffen wird.

Das Transportieren der schwimmenden Lee-Läufer-Windenergieanlage wird bevorzugt durch Schleppen mittels wenigstens eines Wasserfahrzeugs bewerkstelligt, wobei die schwimmende Lee-Läufer-Windenergieanlage mit dem langen Arm voran geschleppt wird.

Besonders bevorzugt wird das Transportieren der schwimmenden Lee-Läufer-Windenergieanlage aber durch Schleppen mittels zwei Wasserfahrzeugen vorgenommen, wobei die zwei Wasserfahrzeuge zum Annähern der schwimmenden Lee-Läufer-Windenergieanlage an den Schwimmkörper den Schwimmkörper zwischen sich nehmend an diesem vorbeifahren.

Die Erfindung wird anhand eines in den beigefügten Zeichnungen dargestellten, besonders bevorzugt ausgestalteten Ausführungsbeispiels näher erläutert. Es zeigen:
- Fig. 1: eine perspektivische Ansicht einer besonders bevorzugt ausgestalteten schwimmenden Windenergieanlage nach der Erfindung schräg von Luv;
- Fig. 2: eine perspektivische Ansicht der besonders bevorzugt ausgestalteten schwimmenden Windenergieanlage aus Fig. 1 schräg von Lee;
- Fig. 3: eine Seitenansicht der schwimmenden Windenergieanlage aus Fig. 1;
- Fig. 4: eine Seitenansicht der schwimmenden Windenergieanlage aus Fig. 1, bei der die auf die Windenergieanlage wirkenden Kräfte dargestellt sind;
- Fig. 5: eine Frontalansicht der schwimmenden Windenergieanlage aus Fig. 1 in Richtung Luv;
- Fig. 6: eine Draufsicht auf die schwimmende Windenergieanlage aus Fig. 1;
- Fig. 7: eine perspektivische Ansicht der Windenergieanlage nach der Erfindung während des Verankerungsvorgangs mit Hilfe von zwei Schleppern;
- Fig. 8: eine Draufsicht auf die von den in Fig. 7 gezeigten zwei Schleppern gezogene Windenergieanlage; und
- Fig. 9: eine Seitenansicht der von den in Fig. 7 gezeigten zwei Schleppern gezogenen Windenergieanlage.

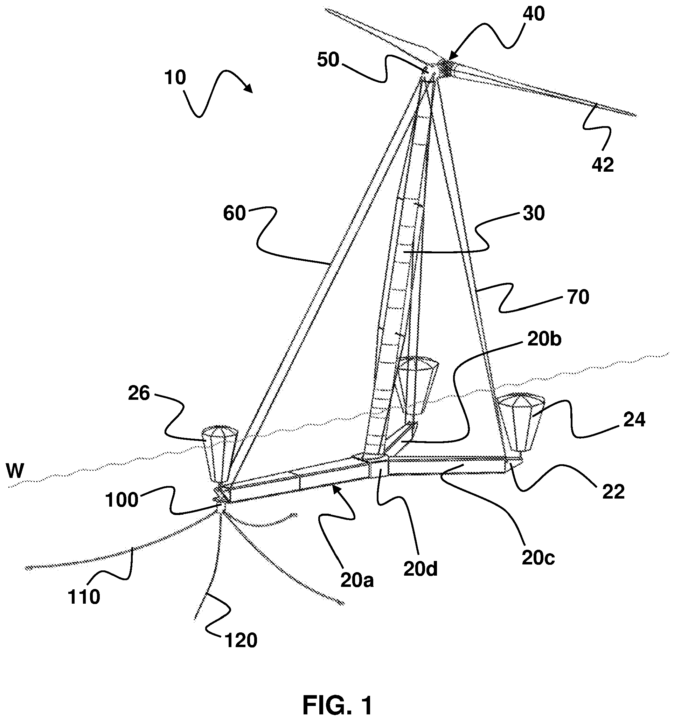

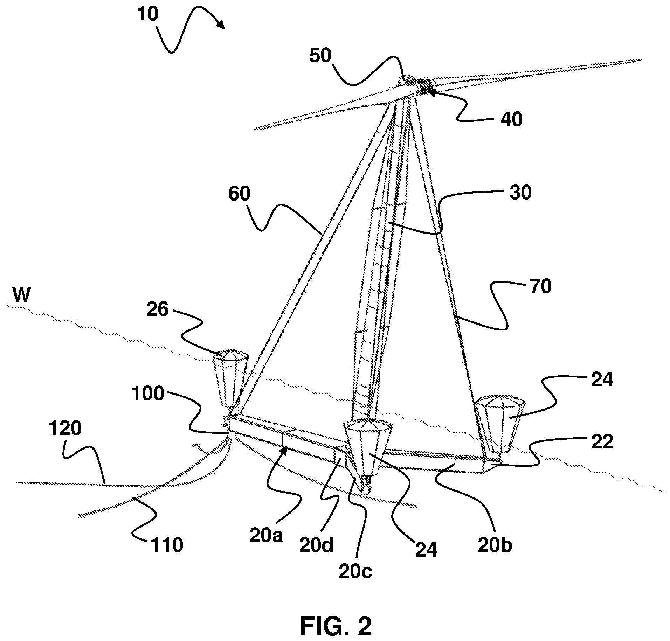

Fig. 1 zeigt eine perspektivische Ansicht einer besonders bevorzugt ausgebildeten schwimmenden Offshore-Windenergieanlage 10 am Ort eines vorinstallierten Schwimmkörpers 100 zur Verankerung der schwimmenden Windenergieanlage 10 am Meeresgrund schräg von Luv, wohingegen Fig. 2 eine perspektivische Ansicht dieser Windenergieanlage schräg von Lee darstellt.

Die schwimmende Windenergieanlage 10 weist ein schwimmendes Fundament 20 auf, das - wie im Folgenden noch näher ausgeführt wird - dreiarmig ausgebildet ist, wobei der mit dem Schwimmkörper 100 verbundene Arm 20a länger als die beiden anderen Arme 20b, 20c ist. Das schwimmende Fundament 20 ist im laufenden Betrieb der Windenergieanlage 10 vollständig unterhalb der Wasserlinie W angeordnet ist. Die Arme 20a, 20b, 20c sind jeweils an ihrem freien Ende mit einem Auftriebskörper 24, 26 verbunden, wobei die an den kurzen Armen 20b, 20c angeordneten Auftriebskörper 24 so eingerichtet sind, dass diese einen größeren Auftrieb aufweisen als der am langen Arm 20a angeordnete Auftriebskörper 26. Die Auftriebskörper 24, 26 sind jeweils mit einem progressiven Auftriebsprofil dargestellt, das ein Einsinken des Fundaments unter die Wasserlinie W erschwert. Allerdings ist es auch denkbar, dass der mit dem langen Arm 20a verbundene Auftriebskörper 26 ein degressives Autriebsprofil aufweist und damit ein Auftauchen erschwert.

Die drei Arme 20a, 20b, 20c sind mittels eines weiteren zum Fundament 20 gehörenden Verbindungselement 20d miteinander verbunden, der als Sockel für den Turm 30 ausgebildet ist. Das Verbindungselement 20d weist hierfür auf seiner Oberseite eine in Bezug auf die Horizontale bis zu 20° nach Lee geneigte Oberfläche auf, die eine bis zu 20° von der Vertikalen abweichende Neigung des Turms 30 bewirkt.

Das Verbindungselement 20d nimmt bevorzugt den oben erläuterten Trimmtank auf, der bei Windlast einem Eintauchen der kurzen Arme 20b, 20c entgegen wirkt.

Der Turm 30 selbst ist mit dem schwimmenden Fundament 20 einerseits und der auf diesem angeordneten Energiewandlungseinheit 50 andererseits drehfest verbunden, wobei der Turm 30 besonders bevorzugt wenigstens abschnittsweise ein die Windrichtungsnachführung der Windenergieanlage 10 unterstützendes Profil aufweist. Die auf dem Turm 30 angeordnete Energiewandlungseinheit 50 ist bevorzugt als Super Compact Drive, also mit in Form eines Kopfträgers ausgebildeten lastübertragenden Gehäusen ausgeprägt und bevorzugt mit einem zwei Rotorblätter 42 aufweisenden Rotor 40 verbunden.

Des Weiteren ist die bevorzugt die Energiewandlungseinheit 50 mit dem langen Arm 20a des Fundaments 20 mittels zwei in Luv-Richtung verlaufender Spannelemente 60 verbunden. Darüber hinaus ist die Energiewandlungseinheit 50 mittels jeweils zwei weiterer Spannelemente 70 mit den kurzen Armen 20b, 20c des Fundaments 20 verbunden. Um eine möglichst große Stabilität der schwimmenden Anlage zu erreichen sind die Spannelemente 60 und die weiteren Spannelemente 70 jeweils an den freien Enden der Arme 20a, 20b, 20c angeschlagen. Hierfür weißt das bevorzugt aus Beton gebildete Fundament 20 aus Metall gefertigte Abschlussplatten 22 auf, die sowohl einen Anschlagpunkt für das Spannelement 60, die weiteren Abspannelemente 70 und die Auftriebskörper 24, 26 aufweisen.

Dabei ist die schwimmende Windenergieanlage 10 zwingend als Lee-Läufer ausgebildet, wobei aus Gründen eines einfachen Aufbaus, geringen Gewichts, einer einfachen Konstruktion und zur Vermeidung von Kollisionen mit den weiteren Spannelementen 70 auf einen Yaw-Antrieb verzichtet wird. Die Anlage 10 kann mit ihrem kompakten Aufbau also vollständig an Land aufgebaut werden, und zum Ort der Offshore-Windenergieanlagen-Installation geschleppt werden, an dem bereits ein mittels Verankerungsmitteln 110, z.B. Ketten oder (Stahl- oder Polyester-) Seile, am Meeresboden verankertes Schwimmelement 100 vorinstalliert ist, das auch bereits mit einem Seekabel 120 verbunden ist. Bei Erreichen des Aufstellungsorts ist es daher nur noch notwendig, die schwimmende Windenergieanlage 10 mit dem vorinstallierten, auf der Wasseroberfläche W schwimmenden Schwimmkörper 100 zu verbinden und die Anlage durch Fluten des Fundaments 20 auf unterhalb der Wasserlinie W abzusenken, wobei der Schwimmkörper 100 neben der mechanischen Kupplung von Offshore-Windenergieanlage 10 und Schwimmkörper 100 zugleich geeignete Elemente zur elektrischen Verbindung von Offshore-Windenergieanlage 10 und Seekabel 120 bereithält.

Grundsätzlich ist bei der Verbindung des schwimmenden Fundaments 20 mit den Verankerungsmitteln 110 oder dem mit den Verankerungsmitteln 110 verbundenen Schwimmkörper(n) 100 durch ein Anschlussmittel darauf zu achten, dass die Windenergieanlage 10 um die Verankerungsmittel 110 frei beweglich bleibt. So sollte die Anbindung zwischen den Verankerungsmitteln 110 (bzw. dem Schwimmkörper 100) und dem Fundament 20 durch ein Drehgelenk erfolgen, damit die Windenergieanlage 10 bei Windrichtungsänderungen frei um die Verankerungsmittel 110 drehbar bleibt, ohne dass sich die Verankerungsmittel 110 miteinander verwinden.

Darüber hinaus werden sich die Verankerungsmittel 110 bei Windlast durch den von der Windenergieanlage 10 auf die Verankerungsmittel 110 ausgeübten Zug vom Gewässergrund abheben, wodurch sich der Winkel der Verbindung zwischen dem Verankerungsmittel 110 und dem Fundament 20 ändert. Neben dem Drehlager sollte die Verbindung zwischen den Verankerungsmitteln 110 (bzw. dem Schwimmkörper 100) und dem Fundament 20 also auch mittels eines Schwenklagers schwenkbar sein.

Für die elektrische Verbindung zwischen dem Seekabel 120 und den elektrischen Einrichtungen der Windenergieanlage 10 ist insbesondere eine Schleifringübertragung vorgesehen. Sollte die Windenergieanlage 10 mit einem eigenen Antrieb ausgestattet sein (s.u.), kann bei entsprechender Manövrierung der Anlage 10, die eine Drehbewegung der Windenergieanlage 10 um die Verankerung über 360° hinaus unterbindet, auch auf einen Schleifring verzichtet werden und stattdessen eine einfache Kontaktierung, beispielsweise ein Steckkontakt, vorgesehen sein.

Weiter ist speziell vorgesehen, dass die Unterkante des Fundaments 20 bei einer vertikalen Ausdehnung des Fundaments 20 von etwa 5 m durch Aufnahme von Wasser in das Fundament 20 auf etwa 20 m unterhalb der Wasserlinie W abgesenkt wird. Diese Dimensionierung der erfindungsgemäß ausgestalteten schwimmenden Windenergieanlage 10 ermöglicht also einerseits die Fertigung in Häfen mit eher geringer Wassertiefe, da das schwimmende Fundament 20 vor dem Fluten nur eine geringe Eintauchtiefe von wenigen Metern (etwa 2,80 m) aufweist. Andererseits ist die Anlage 10 so dimensioniert, dass die Anlage 10 durch ein Absenken auf 20 m unterhalb der Wasserlinie und die Stabilisierung durch die erst nach dem Absenken zur Funktion kommenden Auftriebskörper 24, 26 auch für geringe Wassertiefen ab etwa 30 m geeignet ist.

Die Ausrichtung der Offshore-Windenergieanlage 10 erfolgt dann abhängig von der vorherrschenden Windrichtung selbständig um den am Meeresgrund verankerten Schwimmkörper 100. Weil der Schwimmkörper 100 bei einem Windrichtungswechsel auf der Wasseroberfläche eine Kreisbahn beschreiben wird, ist es vorteilhaft für eine symmetrische Anordnung der Verankerungspunkte am Gewässergrund zu sorgen: bei drei Verankerungsmitteln 110 ist deren Verankerung bevorzugt am Meeresboden auf einem gedachten Kreis im Abstand von jeweils 120° angeordnet, sodass eine gleichmäßige Lastenverteilung gewährleistet ist.

Wenngleich die schwimmende Windenergieanlage 10 nach der Erfindung grundsätzlich selbstausrichtend ausgebildet ist, kann es zu einem strömungs- oder wellenbedingten Versatz zur optimalen Windausrichtung kommen. Daher weist die schwimmende Windenergieanlage 10 bevorzugt auch eine Einrichtung zur Registrierung der Drehung der Windenergieanlage 10 um den Schwimmkörper 100 vorgesehen sein und, um die Ausrichtung nach der Windrichtung zu optimieren, ein Antrieb ähnlich einer Querstrahlsteueranlage genutzt werden, um die Windenergieanlage 10 im Wind zur Energieerzeugung optimal oder zur Vermeidung von Überlast auszurichten.

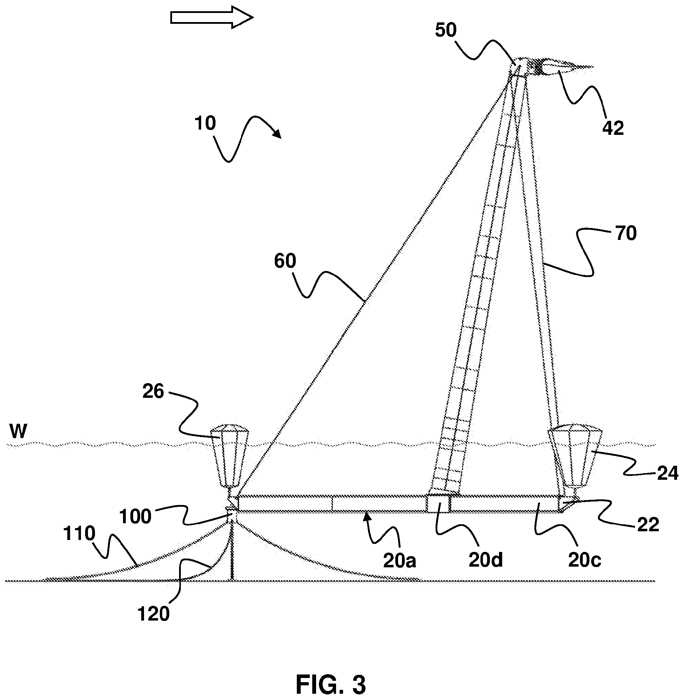

Fig. 3 zeigt eine Seitenansicht der schwimmenden Windenergieanlage aus Fig. 1. In dieser Darstellung ist deutlich die Turmneigung in Richtung Lee und die Abspannung des Turms 30 in Richtung Luv entlang der Achse des langen Arms 20a des Fundaments 20 zu erkennen. Ebenso ersichtlich ist, dass die in Lee an den kurzen Armen 20b, 20c angeordneten Auftriebskörper 24 größer ausgebildet sind als der in Luv am langen Arm 20a des Fundaments 20 angeordnete Auftriebskörper 26.

Durch die automatische Ausrichtung der schwimmenden Windenergieanlage 10 in Abhängigkeit der Windrichtung (siehe Pfeil), wird einerseits der Turm 30 zur Vermeidung von Biegemomenten durch das Spannelement 60 verstärkt, indem das Spannelement 60 die auf die Energiewandlungseinheit 50 wirkende Schubkraft aufnimmt. Andererseits wird die schwimmende Windenergieanlage 10 bei hohen Windlasten durch die Auslegung der an den kurzen Armen 20b, 20c angeordneten Auftriebskörper 24 mit hohem Auftrieb in der Horizontalen stabilisiert. Da die schwimmende Windenergieanlage 10 als Lee-Läufer nämlich so konzipiert ist, dass sich die gesamte Anlage einschließlich Fundament 20 aus dem Wind dreht, kann die Windlast an der Energiewandlungseinheit 50 nur dazu führen, dass die nach Lee gerichteten kurzen Arme 20b, 20c unter Wasser gedrückt und der nach Luv gerichtete lange Arm 20a aus dem Wasser heraus gehoben wird - die Anlage 10 würde also eine nach Lee gerichtete Schlagseite erhalten. Durch die vorgenannte Konstruktion und unterschiedliche Auslegung der Auftriebskörper 24, 26 wird jedoch ein Krängen der Windenergieanlage 10 wirkungsvoll vermindert.

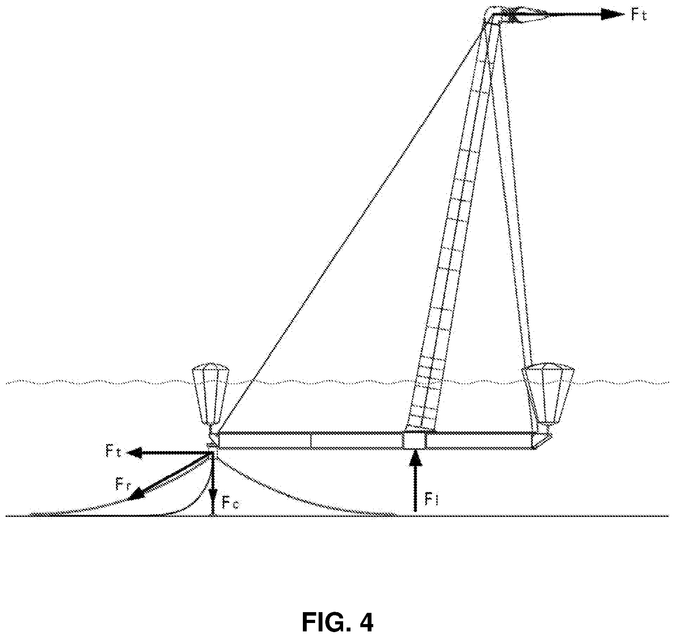

Fig. 4 zeigt eine mit Fig. 3 identische Seitenansicht der schwimmenden Windenergieanlage aus Fig. 1, bei der die auf die Windenergieanlage wirkenden Kräfte eingezeichnet sind. Insbesondere ist gezeigt, dass bei Anbindung der Verankerungsmittel 120 an das freie Ende des langen Arm 20a der Windenergieanlage 10 die auf den Rotor 40 wirkende Schubkraft Ft aufgrund der Gewichtskraft Fc der Verankerungsmittel 120 am Anschlagpunkt als resultierende Kraft Fr effektiv in den Meeresboden abgeleitet werden kann. Die vom Verbindungselement 20d erzeugte Auftriebskraft Fl wirkt dem Turmgewicht entgegen und stellt eine den Rotorschub ausgleichende Gegenkraft dar, die die Anlage in einem statischen Gleichgewicht halten soll.

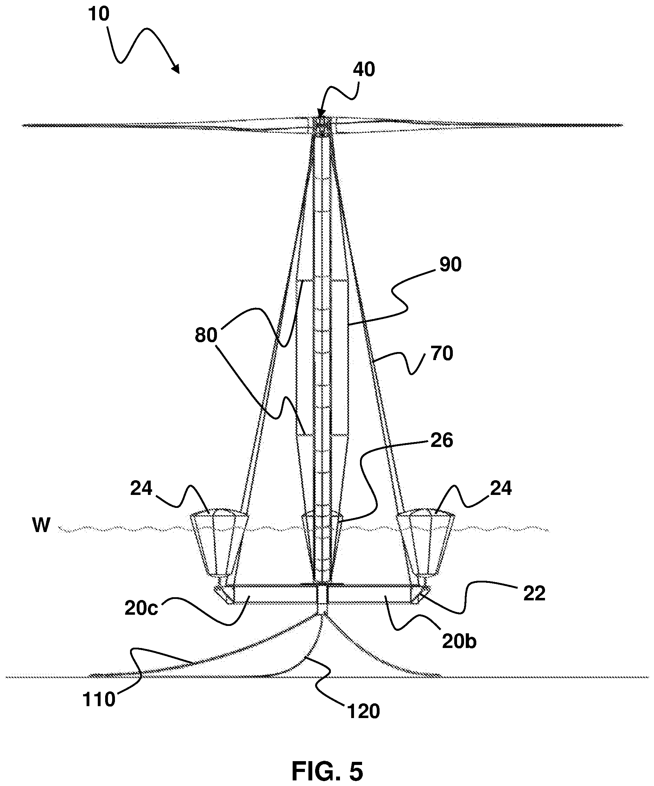

Fig. 5 zeigt eine Frontalansicht der schwimmenden Windenergieanlage in Richtung Luv, bei der nun auch einerseits die quer zur Rotorachse angeordneten Spannelemente 70, die die Energiewandlungseinheit 50 mit den kurzen Armen 20b, 20c des Fundaments 20 verbinden, und die die Energiewandlungseinheit 50 und/oder den Turm 30 und/oder das Fundament 20 mit den Salingen 80 verbindenden Abspannelemente 90 zu erkennen sind, die die Quersteifigkeit des Turms 30 erhöhen.

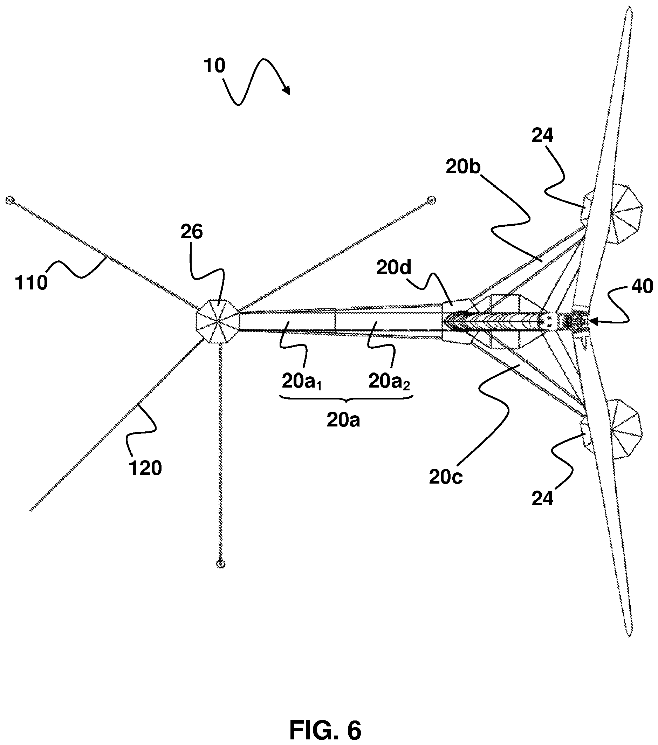

Weiter zeigt Fig. 6 eine Draufsicht auf die besonders bevorzugt ausgestaltete schwimmende Windenergieanlage 10, in der die symmetrische Ausbildung des Fundaments 20 besonders gut ersichtlich ist. Die drei Arme 20a, 20b, 20c des Fundaments 20 sind durch das Verbindungselement 20d, auf dem der Turm 30 angeordnet ist, miteinander verbunden. Der lange Arm 20a ist bevorzugt zweiteilig durch die Einzelelemente 20a₁, 20a₂ aufgebaut, der bei einer Turmhöhe von etwa 100 m etwa 60 m lang ist, wohingegen die kurzen arme 20b, 20c etwa 30 m lang ausgelegt sind.

Zur Trimmung der Anlage 10 kann einerseits das Einzelelement 20a₁ bevorzugt eine Kammer aufweisen, die zur Erhöhung des Gewichts des langen Arms 20a unabhängig von anderen Trimmtanks mit Meerwasser gefüllt werden kann.

Andererseits kann das Verbindungselement 20d als einziger Trimmtank so ausgebildet sein, dass unter Windlast zur Erhöhung des Auftriebs des den Turm 30 tragenden Elements 20d mittels eines Kompressors Druckluft in den Trimmtank des Verbindungselements 20d geleitet und das in diesem Trimmtank vorhandene Wasser unter Gewichtsreduzierung zur Erhöhung des Auftriebs des Verbindungselements 20d aus dem Trimmtank ausgeleitet wird. Verringert sich die auf die Anlage wirkende Schubkraft durch abnehmende Windstärke kann der Trimmtank einfach durch Entlüften wieder geflutet werden, wobei wieder der im Trimmtank vorhandene, die Anlage 10 in der Horizontalen stabilisierende Ausgangspegel eingenommen wird. Wie oben zu Fig. 3 beschrieben, stellt die Verbindungselement 20d erzeugte Auftriebskraft Fl also eine dem Rotorschub entgegenwirkende Kraft dar, die die Anlage in der Horizontalen hält.

Die kurzen Arme 20b, 20c sind in Bezug auf die Längsachse des langen Arms 20a bevorzugt spiegelbildsymmetrisch angeordnet, wobei der zwischen dem langen Arm 20a und einem der kurzen Arme 20b, 20c eingenommene Winkel größer als 90° und kleiner als 130°, bevorzugt etwa 125°, der Winkel zwischen den kurzen Armen 20b, 20c also entsprechend bevorzugt etwa 110° beträgt. Die beiden kurzen Arme leicht nach Lee gespreizt sind und in etwa mit der Energiewandlungseinheit 50 auf einer Höhe, sodass besonders bevorzugt die Anschlagpunkte des weiteren Spannelements 70 am Fundament 20 vor dem Anschlagpunkt des weiteren Spannelements 70 an der Energiewandlungseinheit 50 oder dem Turm 30 liegen, damit die an der Energiewandlungseinheit 50 auftretenden Bremslasten wirkungsvoll in das Fundament 20 eingeleitet werden können. Der lange Arm 20a ist direkt in der Rotorachse nach Luv ausgerichtet, wobei hier zwei Spannelemente 60 vorgesehen sind.

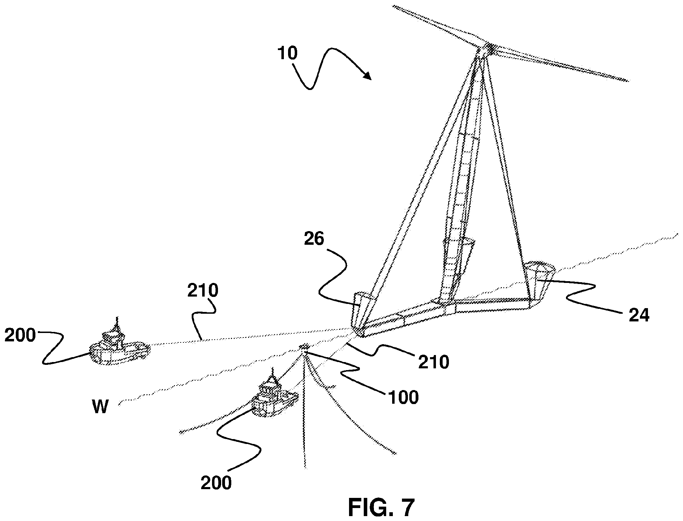

Fig. 7 zeigt nun eine perspektivische Ansicht der von zwei Schleppern gezogenen Windenergieanlage nach der Erfindung am Ort der Installation. Die beiden Schlepper 200 sind mittels Seilen 210 mit dem freien Ende des langen Arms 20a der Windenergieanlage 10 verbunden, sodass der Strömungswiderstand des Y-förmigen schwimmenden Fundaments 20 gering ist. Weiterer Vorteil ist, dass die beiden Schlepper 200 die vorinstallierten Verankerungsmittel 110 und das vorinstallierte Seekabel 120 durch den auf der Wasseroberfläche W treibenden Schwimmkörper 100 leicht auffinden können, zwischen sich nehmen und an diesem vorbeifahren können, sodass der lange Arm 20a der Windenergieanlage 10 an den Schwimmkörper 100 herangezogen werden kann.

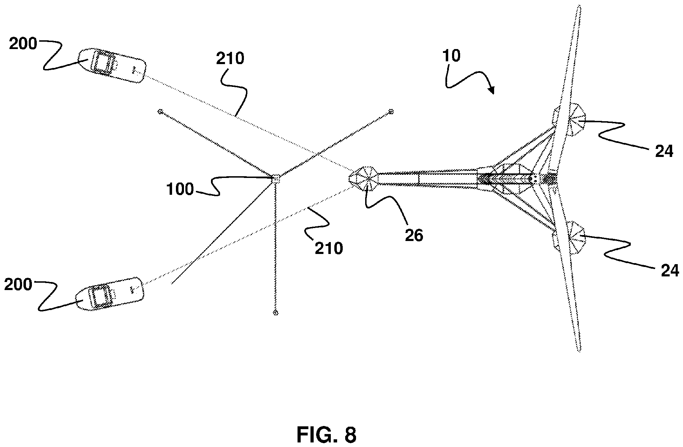

Dieser Zusammenhang wird in der in Fig. 8 gezeigten Draufsicht deutlich. Durch geeignete Fahrweise der Schlepper 200 oder mittels auf die Seile 210 wirkenden, von den Schleppern 200 mitgeführten Winden, kann die Windenergieanlage 10 im Verhältnis zum Schwimmkörper 100 so positioniert werden, dass oberhalb der Wasseroberfläche W eine Verbindung von Windenergieanlage 10 und Schwimmkörper 100 bzw. Verankerungsmitteln 110 und Seekabel 120 erfolgen kann.

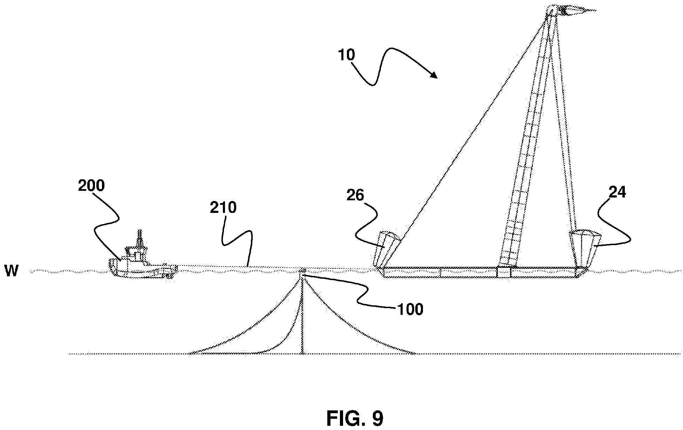

Dabei ist auch - wie Fig. 9 schließlich zeigt - für eine freie Zugänglichkeit des Fundaments 20 der Windenergieanlage 10 gesorgt: der Auftriebskörper 26 wie auch die Auftriebskörper 24 sind beim Transport der Windenergieanlage 10 funktionslos und bevorzugt an den Spannelementen 60, 70 gesichert. Erst nach direkter oder indirekter mechanischer Verbindung des Verankerungsmittel 110 mit der Windenergieanlage 10 und Herstellung einer elektrischen Verbindung der Windenergieanlage 10 mit dem Seekabel 120 wird das Fundament 20 der Windenergieanlage 10 geflutet und mit dem Schwimmkörper 100 auf eine gewünschte Tiefe, beispielsweise 15 m bis 20 m abgesenkt, sodass der in Fig. 3 gezeigte Zustand eingenommen wird. Dabei werden die Auftriebskörper 24, 26 freigegeben und sorgen für die Stabilisierung der schwimmenden Windenergieanlage 10 in der Horizontalen.

## Patentansprüche

1. Schwimmende Lee-Läufer-Windenergieanlage (10) mit
- einem schwimmenden Fundament (20),
- einem auf dem schwimmenden Fundament (20) drehfest angeordneten Turm (30),
- einer auf dem Turm (30) angeordneten, einen Rotor (20) aufweisenden Energiewandlungseinheit (50), die mit dem Turm (30) drehfest verbunden ist, und
- wenigstens einem Spannelement (60), das in Luv-Richtung verlaufend den Turm (30) oder die Energiewandlungseinheit (50) mit dem Fundament (20) verbindet,
dadurch gekenzeichnet, dass
- das Fundament (20) drei Arme (20a, 20b, 20c) aufweist, von denen ein Arm (20a) länger als die beiden anderen Arme (20b, 20c) ist,
- die Arme (20a, 20b, 20c) Y-förmig miteinander verbunden sind und der Turm (30) im Verbindungsbereich (20d) der Arme (20a, 20b, 20c) miteinander auf dem Fundament (20) angeordnet ist, und
- der längste Arm (20a) sich in Luv-Richtung erstreckend mittels des Spannelements (60) mit dem Turm (30) oder der Energiewandlungseinheit (50) verbunden ist.

2. Schwimmende Lee-Läufer-Windenergieanlage (10) nach Anspruch 1, **gekennzeichnet durch** wenigstens ein zu beiden Seiten der Windenergieanlage (10) quer zur Rotorachse verlaufendes weiteres Spannelement (70), das den Turm (30) oder die Energiewandlungseinheit (50) mit jeweils einem der kürzeren Arme (20b, 20c) des Fundaments (20) verbindet.

3. Schwimmende Lee-Läufer-Windenergieanlage (10) nach einem der vorhergehenden Ansprüche, **gekennzeichnet durch** am Turm (30) quer zur Rotorachse angeordnete Salinge (80) und die Energiewandlungseinheit (50) und/oder den Turm (30) und/oder das Fundament (20) mit den Salingen (80) verbindende Abspannelemente (90).

4. Schwimmende Lee-Läufer-Windenergieanlage (10) nach einem der vorhergehenden Ansprüche, **dadurch gekennzeichnet, dass** der Turm (30) im Verhältnis zum Fundament (20) bis zu 20° in Richtung Lee geneigt ist.

5. Schwimmende Lee-Läufer-Windenergieanlage (10) nach einem der vorhergehenden Ansprüche, **dadurch gekennzeichnet, dass** der Turm (30) wenigstens abschnittsweise ein die Windrichtungsnachführung der Windenergieanlage (10) unterstützendes Profil aufweist.

6. Schwimmende Lee-Läufer-Windenergieanlage (10) nach einem der vorhergehenden Ansprüche, **dadurch gekennzeichnet, dass** die beiden anderen Arme (20b, 20c) gleich lang sind.

7. Schwimmende Lee-Läufer-Windenergieanlage (10) nach einem der vorhergehenden Ansprüche, **dadurch gekennzeichnet, dass** das Fundament (20) als Hohlkörper ausgebildet ist.

8. Schwimmende Lee-Läufer-Windenergieanlage (10) nach einem der vorhergehenden Ansprüche, **gekennzeichnet durch** mit jeweils einem mit dem freien Ende jeweils eines Arms (20a, 20b, 20c) des Fundaments (20) angeordneten Auftriebskörper (24, 26).

9. Schwimmende Lee-Läufer-Windenergieanlage (10) nach Anspruch 8, **dadurch gekennzeichnet, dass** die Auftriebskörper (24, 26) jeweils gelenkig mit dem freien Ende jeweils eines Arms (20a, 20b, 20c) des Fundaments (20) verbunden sind.

10. Schwimmende Lee-Läufer-Windenergieanlage (10) nach einem der Ansprüche 8 und 9, **dadurch gekennzeichnet, dass** die Auftriebskörper (24, 26) konisch ausgebildet sind, wobei die Deckfläche oder die Spitze der konisch ausgebildeten Auftriebskörper (24, 26) mit dem freien Ende jeweils eines Arms (20a, 20b, 20c) des Fundaments (20) verbunden ist.

11. Schwimmende Lee-Läufer-Windenergieanlage (10) nach einem der Ansprüche 8 bis 10, **dadurch gekennzeichnet, dass** die an den kurzen Armen (20b, 20c) angeordneten Auftriebskörper (24) einen größeren Auftrieb erzeugen als der am langen Arm (20a) angeordnete Auftriebskörper (26).

12. Schwimmende Lee-Läufer-Windenergieanlage (10) nach einem der Ansprüche 8 bis 11, **dadurch gekennzeichnet, dass** die an den kurzen Armen (20b, 20c) angeordneten Auftriebskörper (24) ein progressives Auftriebsprofil aufweisen und der am langen Arm (20a) angeordnete Auftriebskörper (26) ein degressives Auftriebsprofil aufweist.

13. Schwimmende Lee-Läufer-Windenergieanlage (10) nach einem der vorhergehenden Ansprüche, **dadurch gekennzeichnet, dass** der lange Arm (20a) im Bereich des Anschlagpunkts für das Spannelement (60) ein Anschlussmittel zur Verbindung mit wenigstens einem die schwimmende Lee-Läufer-Windenergieanlage (10) am Meeresboden verankernden Verankerungsmittel (110) aufweist.

14. Schwimmende Lee-Läufer-Windenergieanlage (10) nach einem der vorhergehenden Ansprüche, **dadurch gekennzeichnet, dass** die schwimmende Lee-Läufer-Windenergieanlage (10) einen Antrieb, insbesondere eine Querstrahlsteueranlage aufweist.

15. Schwimmende Lee-Läufer-Windenergieanlage (10) nach einem der vorhergehenden Ansprüche, **dadurch gekennzeichnet, dass** der Rotor (40) ein Zweiblattrotor ist.

## Claims

1. A floating downwind turbine power plant (10) comprising:
- a floating foundation (20),
- a tower (30), which is non-rotatably arranged on the floating foundation (20),
- an energy conversion unit (50), which is arranged on the tower (30), comprises a rotor (20) and is non-rotatably connected to the tower (30), and
- at least one tensioning element (60), extending in the upwind direction, which connects the tower (30) or the energy conversion unit (50) to the foundation (20),
**characterized in that**
- the foundation (20) has three legs (20a, 20b, 20c), one leg of which (20a) is longer than the other two legs (20b, 20c),
- the legs (20a, 20b, 20c) are connected to each other in a Y-shape and the tower (30) is arranged on the foundation (20) in the connection region (20d) of the legs (20a, 20b, 20c), and
- the longest leg (20a), extending in the upwind direction, is connected to the tower (30) or the energy conversion unit (50) by means of the tensioning element (60).

2. The floating downwind turbine power plant (10) of claim 1, **characterized by** at least one further tensioning element (70), which extends in a transversal direction with respect to the rotor axis on both sides of the wind power plant (10) and which connects the tower (30) or the energy conversion unit (50) with a respective one of the shorter legs (20b, 20c) of the foundation (20).

3. The floating downwind turbine power plant (10) according to anyone of the preceding claims, **characterized by** crosstrees (80), which are arranged on the tower (30) in a transversal direction with respect to the rotor axis, and by bracing elements (90), which connect the energy conversion unit (50) and/or the tower (30) and/or the foundation (20) to the crosstrees (80).

4. The floating downwind turbine power plant (10) according to anyone of the preceding claims, **characterized in that** the tower (30) is inclined in the downwind direction by up to 20° relative to the foundation (20).

5. The floating downwind turbine power plant (10) according to anyone of the preceding claims, **characterized in that** the tower (30) is provided, at least in sections, with a profile, which supports the wind direction tracking of the wind power plant (10).

6. The floating downwind turbine power plant (10) according to anyone of the preceding claims, **characterized in that** the two other legs (20b, 20c) have the same length.

7. The floating downwind turbine power plant (10) according to anyone of the preceding claims, **characterized in that** the foundation (20) is provided as a hollow body.

8. The floating downwind turbine power plant (10) according to anyone of the preceding claims, **characterized by** buoyancy bodies (24, 26), which are respectively arranged on a free end of a respective leg (20a, 20b, 20c) of the foundation (20).

9. The floating downwind turbine power plant (10) of claim 8, **characterized in that** the buoyancy bodies (24, 26) are pivotally connected to a respective free end of a respective leg (20a, 20b, 20c) of the foundation (20).

10. The floating downwind turbine power plant (10) according to anyone of the claims 8 and 9, **characterized in that** the buoyancy bodies (24, 26) have a conical shape, wherein the deck area or the tip of the conical buoyancy bodies (24, 26) is connected to the free end of a respective leg (20a, 20b, 20c) of the foundation (20).

11. The floating downwind turbine power plant (10) according to anyone of the claims 8 to 10, **characterized in that** the buoyancy bodies (24) arranged on the shorter legs (20b, 20c) generate a greater buoyancy than the buoyancy body (26), which is arranged on the long leg (20a).

12. The floating downwind turbine power plant (10) according to anyone of the claims 8 to 11, **characterized in that** the buoyancy bodies (24) arranged on the shorter legs (20b, 20c) have a progressively increasing buoyancy profile and the buoyancy body (26) arranged on the long leg (20a) has a progressively decreasing buoyancy profile.

13. The floating downwind turbine power plant (10) according to anyone of the preceding claims, **characterized in that** the long leg (20a) has a connection means in the area of the attachment point for the tensioning element (60), for connecting to at least one anchoring means (110), which anchors the floating downwind turbine power plant (10) to the sea bed.

14. The floating downwind turbine power plant (10) according to anyone of the preceding claims, **characterized in that** the floating downwind turbine power plant (10) has a propulsion unit, in particular a transverse thrust steering system.

15. The floating downwind turbine power plant (10) according to anyone of the preceding claims, **characterized in that** the rotor (40) is a two-blade rotor.

## Revendications

1. Éolienne sous le vent flottante (10) équipée
- d'une base flottante (20),
- d'une tour non rotative (30) installée sur la base flottante (20),
- d'un convertisseur d'énergie (50) équipé d'un rotor (20) et situé sur la tour (30), et fixé à celle-ci (30) de manière à ne pas tourner, et
- d'au moins un élément de serrage (60) reliant, dans le sens du vent, la tour (30) ou le convertisseur d'énergie (50) à la base flottante (20),
**caractérisée en ce que**
- la base (20) est équipée de trois bras (20a, 20b, 20c) dont un bras (20a) est plus long que les deux autres (20b, 20c),
- les bras (20a, 20b, 20c) sont reliés entre eux en forme de Y, et la tour (30) est installée au niveau de la base (20), dans la zone de jointure (20d) des bras (20a, 20b, 20c), et
- le bras le plus long (20a) est relié à la tour (30) ou au convertisseur d'énergie (50) au moyen de l'élément de serrage (60) en s'étirant dans le sens du vent.

2. Éolienne sous le vent flottante (10) selon la revendication n°1 **caractérisée par** au moins un autre élément de serrage (70) dirigé vers les deux côtés de l'éolienne (10), transversalement à l'axe des rotors et reliant la tour (30) ou le convertisseur d'énergie (50) avec, respectivement, un des bras les plus courts (20b, 20c) de la base (20).

3. Éolienne sous le vent flottante (10) selon une des revendications précédentes, **caractérisée par** des barres de flèche (80) placées sur la tour (30) en biais par rapport à l'axe du rotor et des éléments de tension (90) reliant le convertisseur d'énergie (50) et/ou la tour (30) et/ou la base (20) avec les barres de flèche (80).

4. Éolienne sous le vent flottante (10) selon une des revendications précédentes, **caractérisée en ce que** la tour (30) est inclinée jusqu'à 20° par rapport à la base (20) dans le sens du vent.

5. Éolienne sous le vent flottante (10) selon une des revendications précédentes, **caractérisée en ce que** la tour (30) présente un profilé soutenant au moins en partie le contrôle d'embardée de l'éolienne (10).

6. Éolienne sous le vent flottante (10) selon une des revendications précédentes, **caractérisée en ce que** les deux autres bras (20b, 20c) sont de la même longueur.

7. Éolienne sous le vent flottante (10) selon une des revendications précédentes, **caractérisée en ce que** la base (20) est un corps vide.

8. Éolienne sous le vent flottante (10) selon une des revendications précédentes, **caractérisée par** un corps d'entraînement (24, 26) disposé sur chaque extrémité libre d'un bras (20a, 20b, 20c) de la base (20).

9. Éolienne sous le vent flottante (10) selon la revendication n°8 **caractérisée en ce que** les flotteurs (24, 26) sont reliés de manière articulée à l'extrémité libre de chaque bras (20a, 20b, 20c) de la base (20).

10. Éolienne sous le vent flottante (10) selon une des revendications 8 et 9, **caractérisée en ce que** les flotteurs (24, 26) ont une forme conique, à savoir que la surface de pont ou la pointe des flotteurs coniques (24, 26) est reliée à l'extrémité libre de chaque bras (20a, 20b, 20c) de la base (20).

11. Éolienne sous le vent flottante (10) selon une des revendications 8 à 10, **caractérisée en ce que** les flotteurs (24) situés sur les bras les plus courts (20b, 20c) génèrent une plus grande flottabilité que que flotteur (26) situé sur le bras le plus long (20a).

12. Éolienne sous le vent flottante (10) selon une des revendications 8 à 11, **caractérisée en ce que** les flotteurs (24) situés sur les bras les plus courts (20b, 20c) génèrent un profil de flottaison progressif, et le flotteur (26) situé sur le bras le plus long (20a) présente un profil de flottaison dégressif.

13. Éolienne sous le vent flottante (10) selon une des revendications précédentes, **caractérisée en ce que** le bras long (20a) situé dans la zone du point de butée présente pour l'élément de serrage (60) un dispositif de raccord avec au moins un dispositif d'ancrage (110) rattachant l'éolienne sous le vent flottante (10) au fond marin.

14. Éolienne sous le vent flottante (10) selon une des revendications précédentes, **caractérisée en ce que** l'éolienne sous le vent flottante (10) est équipée d'un système d'entraînement, et notamment un système de commande à rayon transversal.

15. Éolienne sous le vent flottante (10) selon une des revendications précédentes, **caractérisée en ce que** le rotor (40) est un rotor à deux pales.
